# EUROPÄISCHE PATENTSCHRIFT

(11) **EP 2 483 632 B1**
(45) Veröffentlichungstag und Bekanntmachung des Hinweises auf die Patenterteilung: **02.03.2016**
(21) Anmeldenummer: 10737582.6
(22) Anmeldetag: 02.08.2010
(51) Int. Cl.: G01C 3/08, G01C 15/00, G01S 7/481, G01S 17/08

(54) **OPTISCHES ENTFERNUNGSMESSGERÄT MIT VERWACKELUNGSSCHUTZ**
OPTICAL ANTI-BLUR DISTANCE-MEASURING DEVICE
APPAREIL DE MESURE DE DISTANCE OPTIQUE AVEC DISPOSITIF ANTI-BOUGÉ

(30) Priorität: 02.10.2009 DE 102009045312
(43) Veröffentlichungstag der Anmeldung: 08.08.2012
(73) Patentinhaber: Robert Bosch GmbH, 70442 Stuttgart (DE)
(72) Erfinder: SCHNEIDER, Bettina, 71642 Ludwigsburg (DE); SCHNEIDER, Marcus, 71642 Ludwigsburg (DE)
(86) Internationale Anmeldenummer: PCT/EP2010/061176
(87) Internationale Veröffentlichungsnummer: WO 2011/038954

(56) Entgegenhaltungen:
- EP-A2- 2 056 066
- US-A1- 2002 093 739
- US-A1- 2004 046 953

## Beschreibung

### GEBIET DER ERFINDUNG

Die Erfindung betrifft eine Messvorrichtung zur Messung einer Entfernung zwischen der Messvorrichtung und einem Zielobjekt mit Hilfe optischer Strahlung. Eine solche Messvorrichtung wird auch als optisches Entfernungsmessgerät bezeichnet und kann als separates, beispielsweise handgehaltenes Gerät, oder in einer anderen Vorrichtung, beispielsweise einem Werkzeug, integriert vorgesehen sein.

### HINTERGRUND DER ERFINDUNG

Es sind optische Entfernungsmessgeräte bekannt, die einen zeitlich modulierten Lichtstrahl in Richtung auf ein Zielobjekt hin, dessen Abstand zu dem Messgerät ermittelt werden soll, aussenden. Von dem angepeilten Zielobjekt reflektiertes oder rückgestreutes, rücklaufendes Licht wird von dem Messgerät zumindest teilweise detektiert und zur Ermittlung der zu messenden Entfernung verwendet. Beispielsweise durch Auswertung einer Phasenverschiebung zwischen einem ausgesendeten, zeitlich modulierten Lichtstrahl und einem detektierten, rücklaufenden Licht kann auf eine Laufzeit des Lichts zwischen Aussendung und Detektion und damit auf einen Abstand zwischen dem Entfernungsmessgerät und dem Zielobjekt geschlossen werden. Ein solches Prinzip einer optischen Entfernungsmessung ist allgemein unter der Bezeichnung "Time of flight ranging" beispielsweise mit kontinuierlicher oder gepulster Modulation der Intensität eines Laserstrahls bekannt. Ein typischer Messbereich liegt hierbei bei Entfernungen von wenigen Zentimetern bis zu mehreren hundert Metern.

Optische Entfernungsmessgeräte werden häufig zum Vermessen von Entfernungen auf Baustellen verwendet. Sie zeichnen sich dabei vorteilhaft dadurch aus, dass mit einem einfachen, handgehaltenen Gerät große Entfernungen gemessen werden können, indem einfach mit dem von dem Messgerät ausgesendeten Lichtstrahl ein Zielobjekt anvisiert wird, dessen Entfernung gemessen werden soll, und das zurücklaufende Licht detektiert wird.

Allerdings kann insbesondere das Anvisieren kleiner Zielobjekte über große Entfernungen mit einem handgehaltenen Messgerät schwierig sein. Soll zum Beispiel die Entfernung zu einem 10 m weit entfernten Rohr, dessen Durchmesser lediglich 10 cm beträgt, gemessen werden, so kann sich dies in der Praxis als schwierig erweisen, da bereits ein geringfügiges Verwackeln des handgehalte-nen Messgerätes, das heißt, eine Verkippung des Messgerätes um eine Achse quer zur Ausbreitungsrichtung des ausgesendeten Lichts, dazu führen kann, dass das Rohr von dem ausgesendeten Lichtstrahl verfehlt wird. In dem angeführten Beispiel reicht hierfür bereits eine Verkippung um einen Winkel von etwa 1°. Daher werden herkömmlicherweise in solchen Situationen meist Stative eingesetzt, wodurch aber die einfache Handhabung des Messgerätes beispielsweise aufgrund einer erforderlichen Montage/Demontage sowie des zum Aufstellen des Stativs benötigten Stellplatzes erschwert werden kann.

Das Dokument US2004/0046953 offenbart eine handgehaltene Messvorrichtung gemäß dem Oberbegriff des Anspruchs 1.

Das Dokument EP2056066 offenbart eine stationäre Messvorrichtung mit einer Bildsensorik, wobei die Messvorrichtung dazu ausgerüstet ist, Vibrationen der Messvorrichtung auszugleichen.

### OFFENBARUNG UND MÖGLICHE AUSFÜHRUNGSFORMEN DER ERFINDUNG

Es kann daher ein Bedarf an einem Entfernungsmessgerät bestehen, mit dem die Gefahr fehlgeschlagener oder ungenauer Entfernungsmessungen aufgrund eines Verwackelns des Messgerätes vermindert werden kann, vorzugsweise ohne dass die Handhabung des Messgeräts wesentlich erschwert wird.

Ein solcher Bedarf kann mit einer Messvorrichtung gemäß Anspruch 1 erfüllt werden. Weitere Ausgestaltungen der Messvorrichtung sind in abhängigen Ansprüchen angegeben.

Aspekte der vorgeschlagenen Messvorrichtung können als auf den folgenden Erkenntnissen und Ideen beruhend angesehen werden:
Eine Messvorrichtung zur optischen Entfernungsmessung weist unter anderem eine Sendeeinrichtung zur Aussendung optischer Messstrahlung entlang einer Aussenderichtung auf ein Zielobjekt hin, eine Empfangseinrichtung zur Detektion von von dem Zielobjekt zurücklaufender optischer Messstrahlung sowie eine Steuer-/Auswerteeinrichtung zum Empfangen und Auswerten von Detektiönssignalen der Empfangseinrichtung, um eine Entfernung zwischen der Messvorrichtung und dem Zielobjekt zu bestimmen, auf.

Es wurde beobachtet, dass insbesondere mit handgehaltenen optischen Entfernungsmessvorrichtungen-Schwierigkeiten auftreten können, wenn kleine, weit entfernte Zielobjekte anvisiert werden sollen. Als Ursache dieser Schwierigkeiten wurde ein mögliches Verwackeln der handgehaltenen Messvorrichtung, beispielsweise aufgrund einer Zitterbewegung der haltenden Hand, erkannt. Um ein solches Verwackeln detektieren zu können und den dadurch bewirkten Messfehlern entgegenwirken zu können, wird vorgeschlagen, die Entfernungsmessvorrichtung zusätzlich mit einer Verkippungsdetektionseinrichtung auszustatten, die dazu ausgelegt ist, einen Verkippungswinkel der Messvorrichtung um wenigstens eine Verkippungsachse, die quer zu der Aussenderichtung der Messstrahlung verlaufen kann, zu erfassen.

Erfindungsgemäß ist die Verkippungsdetektions-einrichtung hierbei mittels einer Bildsensorik realisiert und der von der Verkippungsdetektionseinrichtung erfasste Verkippungswinkel wird dazu verwendet, Messfehlern, die durch eine unabsichtliche Verkippung der Messvorrichtung verursacht sein können, entgegenzuwirken.

Erfindungsemäß ist die Messvorrichtung dazu ausgelegt, die Sendeeinrichtung basierend auf einem von der Verkippungsdetektionseinrichtung erfassten Verkippungswinkel einzustellen. Die Sendeeinrichtung ist dazu ausgelegt und kann derart angesteuert werden, dass sie optische Messstrahlung in verschiedene Richtungen aussenden kann, das heißt, dass ein Winkel zwischen der Messvorrichtung und der Aussenderichtung der optischen Messstrahlung gezielt variiert werden kann. Die Messvorrichtung kann hierbei beispielsweise mit Hilfe einer integrierten Steuereinrichtung dazu ausgelegt sein, die Sendeeinrichtung derart anzusteuern, dass die Aussenderichtung der optischen Messstrahlung möglichst derart nachgeführt wird, dass einem erfassten Verkippungswinkel entgegengewirkt wird. Es kann damit erreicht werden, dass sich ein mögliches Verwackeln der Messvorrichtung nicht auf die Aussenderichtung der optischen Messstrahlung auswirkt, so dass das ursprünglich anvisierte Zielobjekt auch trotz des Verwackelns anvisiert bleibt.

Die Sendeeinrichtung weist hierzu erfindungsgemäß eine steuerbare Umlenkeinrichtung auf, um einen von einer Lichtquelle ausgesendeten Messstrahl in die Aussenderichtung umzulenken. Als Lichtquelle kann hierbei beispielsweise eine Laserdiode verwendet werden, die ihr Licht in Richtung eines drehbaren oder schwenkbaren Umlenkspiegels aussendet, wobei durch Verdrehen bzw. Verschwenken des Umlenkspiegels die Richtung des aus der Messvorrichtung ausgesendeten Laserstrahls gezielt variiert werden kann. Alternativ kann die Umlenkeinrichtung auch in anderer Weise zur Umlenkung der optischen Messstrahlung ausgestaltet sein, beispielsweise durch eine Anordnung von einem oder mehreren optischen Elementen, deren eine Lichtausbreitung beeinflussende optische Eigenschaften gezielt variiert werden können. Beispielsweise kann eine solche Anordnung Linsen, Spiegel, Kerr-Elemente, doppelbrechende Elemente, Polarisationsfilter, etc. aufweisen.

Die Verkippungsdetektionseinrichtung kann ferner dazu ausgelegt sein, eine Verkippungswinkeländerungsrate zu erfassen. Die Verkippungswinkeländerungsrate kann hierbei angeben, wie sich ein Verkippungswinkel pro Zeit ändert. Mit anderen Worten gibt die Verkippungswinkeländerungsrate an, wie schnell sich ein Verkippungswinkel ändert. Die erfasste Verkippungswinkeländerungsrate kann hierbei dazu genutzt werden, um die Aussendung optischer Messstrahlung durch die Sendeeinrichtung noch gezielter beeinflussen zu können.

Beispielsweise kann anhand der erfassten Verkippungswinkeländerungsrate erkannt werden, ob es sich bei einer Verkippung der Messvorrichtung um eine vom Anwender gezielt durchgeführte Bewegung der Messvorrichtung, beispielsweise um ein Zielobjekt anzuvisieren, handelt oder ob die Verkippung möglicherweise das Ergebnis eines unerwünschten Zitterns/Verwackelns der Messvorrichtung ist. Ein gezieltes Ausrichten der Messvorrichtung erfolgt in der Regel verhältnismäßig langsam, das heißt mit einer niedrigen Verkippungswinkeländerungsrate, wohingegen ein unerwünschtes Zittern/Verwackeln meist schnell und in hoher Frequenz um eine im Mittel statisch gehaltene oder langsam bewegte Messvorrichtung, das heißt mit einer hohen Verkippungswinkeländerungsrate, erfolgt.

Die Messvorrichtung kann daher dazu ausgelegt sein, die Sendeeinrichtung basierend auf einem von der Verkippungsdetektionseinrichtung erfassten Verkippungswinkel nur dann einzustellen, das heißt, beispielsweise dem Verkippungswinkel durch Variieren der Aussenderichtung der optischen Messstrahlung entgegenzuwirken, wenn die Verkippungswinkeländerungsrate oberhalb eines Schwellenwertes ist. Ein Schwellenwert kann hierbei beispielsweise gerätespezifisch fest voreingestellt sein oder kann über eine an der Messvorrichtung vorgesehene Eingabevorrichtung von einem Anwender einstellbar vorgegeben werden. Typische Schwellenwerte für Verkippungswinkeländerungsraten, anhand derer zwischen einer gewünschten langsamen Bewegung und einem unerwünschten Verwackeln der Messvorrichtung unterschieden werden kann, können im Bereich von beispielsweise 36 bis 48 Winkelgrad/Sekunde liegen.

Erfindungsgemäß weist die Verkippungsdetektionseinrichtung eine Bildsensorik auf, die dazu ausgelegt ist, den Verkippungswinkel aufgrund einer relativen Verschiebung eines aufgenommenen Merkmals innerhalb einer Sequenz von aufgenommenen Bildern zu bestimmen.

Die Bildsensorik kann hierzu beispielsweise mit einer Art Kamera, beispielsweise in Form eines CCD-Chips, ausgestattet sein, die es erlaubt, zweidimensionale Bilder aufzunehmen. Die Bildsensorik kann dabei insbesondere derart ausgelegt sein, dass Bilder von dem Bereich, der mit Hilfe der optischen Messstrahlung anvisiert werden soll, aufgenommen werden. Indem mehrere Bilder sequentiell nacheinander aufgenommen werden und analysiert wird, ob sich Merkmale, die beispielsweise in dem Bild gut erkennbare Kontraste erzeugen, innerhalb der Bildfläche von einem Bild zum nachfolgenden Bild verlagert haben, kann erkannt werden, ob die Messvorrichtung zwischenzeitlich verkippt wurde. Mit Hilfe zusätzlicher Information über eine Entfernung zu dem von der Bildsensorik aufgenommenen Bereich kann auf einen konkreten Verkippungswinkel rückgeschlossen werden.

Die Bildsensorik kann ferner dazu verwendet werden, ein Bild einer aktuellen Messsituation aufzunehmen und in einer in der Messvorrichtung integrierten Speichereinrichtung zu speichern. Eine solche "Fotofunktionalität" kann vorteilhaft sein, um eine Messsituation, das heißt zum Beispiel eine Umgebung und eine Ausrichtung der Messvorrichtung für eine bestimmte Entfernungsmessung, nachvollziehbar zu dokumentieren. Es ist hierbei denkbar, den Punkt, für den die Entfernungsmessung durchgeführt wurde, zwecks Dokumentation und/oder Nachweis im aufgenommenen Bild geeignet hervorzuheben, zum Beispiel durch Einzeichnen eines kleinen Kreises. Das aufgenommene Bild kann geeignet in maschinenlesbarer Weise in der Speichereinrichtung, die zum Beispiel als Flash-Speicher ausgebildet sein kann, gespeichert werden.

In einer Ausgestaltung kann die Verkippungsdetektionseinrichtung der Messvorrichtung zusätzlich zu der Bildsensorik einen Drehratensensor aufweisen. Ein solcher Drehratensensor kann eine Rotationsgeschwindigkeit, mit der die Messvorrichtung verkippt wird, messen. Üblicherweise werden hierzu Kräfte bzw. Beschleunigungen, die durch die Verkippungsbewegung bewirkt werden, gemessen. Durch Integration lässt sich daraus ableiten, um welchen Winkel die Messvorrichtung innerhalb eines Zeitraums verkippt wurde.

Drehratensensoren lassen sich inzwischen kostengünstig in kleiner Baugröße herstellen. Beispielsweise wurden Drehratensensoren entwickelt, die in Kraftfahrzeugen mit Hilfe der sogenannten ESP-Funktion die Gefahr eines unkontrollierten Schleuderns minimieren können, indem die Drehrate des Fahrzeugs um seine Hochachse mittels Drehratensensoren gemessen und mit einer Solldrehrate verglichen wird, wobei bei zu hohen Abweichungen gezielt in das Fahrwerk eingegriffen wird, um den Fahrzustand zu stabilisieren. Die Drehratensensorik moderner ESP-Geräte ist hierbei hochgenau und erlaubt das Erkennen von sehr kleinen Drehwinkeln. Aufgrund geringer Kosten und geringer Baugröße kann sie sich auch für die Verwendung als Verkippungsdetektionseinrichtung in einer Entfernungsmessvorrichtung eignen.

Die Messvorrichtung kann ferner dazu ausgelegt sein, basierend auf wenigstens zwei Entfernungsmessungen und wenigstens einer Messung eines Verkippungswinkels einer zwischen den Entfernungsmessungen durchgeführten Verkippung Zusatzinformation zu berechnen.

Beispielsweise kann durch Messen einer ersten Entfernung in einer ersten Richtung, anschließendes Verkippen der Messvorrichtung und dann Messen einer Entfernung in einer zweiten Richtung als Zusatzinformation die Fläche eines von den beiden Messrichtungen aufgespannten Parallelogramms berechnet werden. Bei Messung einer dritten Entfernung quer zu den Richtungen der beiden ersten Entfernungsmessungen kann ein entsprechendes Volumen berechnet werden.

In der Praxis kann es beispielsweise vorteilhaft sein, mit Hilfe der Messvorrichtung zunächst eine Breite eines Raums zu messen, die Messvorrichtung dann um 90° zu verkippen und anschließend die Länge des Raumes zu vermessen, um aus den beiden Messwerten die Grundfläche des Raums errechnen zu können. Da der Verkippungswinkel mit Hilfe der Verkippungsdetektionseinrichtüng erfasst werden kann, kann eine solche Flächenberechnung in einfacher Weise auch für nicht-rechtwinklige Raumgeometrien durchgeführt werden.

Außerdem kann mit Hilfe der Verkippungsdetektionseinrichtung beispielsweise erkannt werden, wenn die Messvorrichtung nicht um einen wahrscheinlich gewünschten Winkel von 90° verkippt wurde, sondern sich davon geringfügig unterscheidet, beispielsweise um 89° verkippt wurde, und eine entsprechende Korrektur kann bewirkt werden.

Mögliche Aspekte, Vorteile und Ausgestaltungen der Erfindung wurden vorangehend mit Bezug auf einzelne Ausführungsformen der Erfindung beschrieben. Die Beschreibung, die zugehörigen Figuren sowie die Ansprüche enthalten zahlreiche Merkmale in Kombination. Ein Fachmann wird diese Merkmale, insbesondere auch die Merkmale verschiedener Ausführungsbeispiele, auch einzeln betrachten und zu sinnvollen weiteren Kombinationen zusammenfassen.

### KURZE BESCHREIBUNG DER FIGUREN

Nachfolgend werden Ausführungsformen der Erfindung und darin enthaltene Teilaspekte mit Bezug auf die beigefügten Figuren beschrieben. Die Figuren sind lediglich schematisch und nicht maßstabsgetreu.
Fig. 1 zeigt eine Messvorrichtung zur optischen Entfernungsmessung gemäß einer Ausführungsform der vorliegenden Erfindung.
Fig. 2 zeigt eine beispielhafte Messsituation.
Fig. 3 veranschaulicht eine Auswertung einer Verkippung mit einer Messvorrichtung zur optischen Entfernungsmessung mit einem Drehratensensor.
Fig. 4 zeigt eine Bildsequenz, mit Hilfe derer eine Verkippung einer Messvorrichtung zur optischen Entfernungsmessung gemäß einer Ausführungsform der vorliegenden Erfindung erfasst werden kann.

### DETAILLIERTE BESCHREIBUNG VON AUSFÜHRUNGSFORMEN

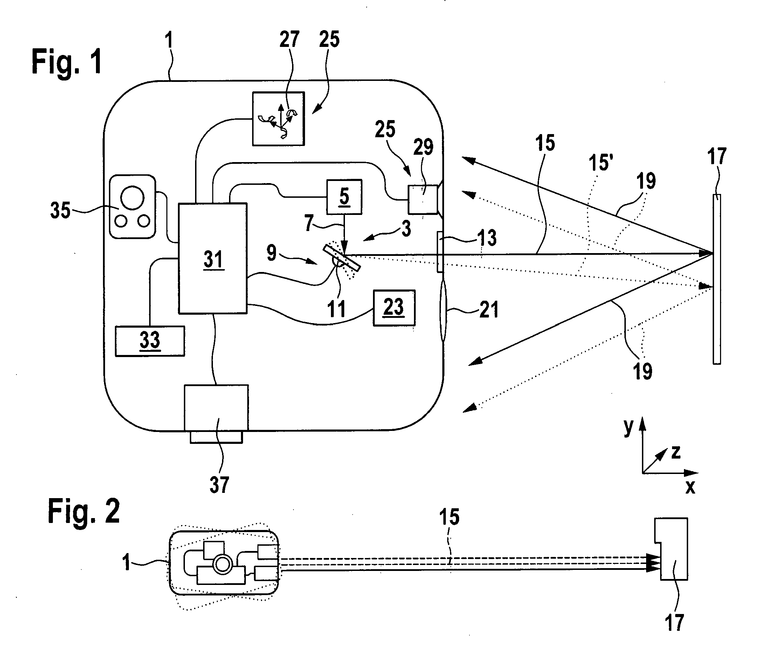

Fig. 1 stellt eine Prinzipskizze einer Messvorrichtung 1 zur optischen Entfernungsmessung gemäß einer Ausführungsform der vorliegenden Erfindung in Form eines Laserentfernungsmessgerätes dar. Das Laserentfernungsmessgerät weist eine Sendeeinrichtung 3 mit einer Lichtquelle 5 in Form einer Laserdiode auf, die einen Messstrahl 7 auf einen als Umlenkeinrichtung 9 dienenden, verschwenkbaren Spiegel 11 strahlt. Je nach Positionierung des Spiegels 11 wird der Messstrahl 7 unter einem anderen Winkel abgelenkt und verlässt die Messvorrichtung 1 durch ein Fenster 13 entlang einer Aussenderichtung 15, 15' hin zu einem Zielobjekt 17. An dem Zielobjekt 17 wird die Messstrahlung 15, 15' rückreflektiert bzw. rückgestreut und läuft als Messstrahlung 19 zu der Messvorrichtung 1 zurück, wo sie durch ein weiteres Fenster 21, das zur Fokussierung der rücklaufenden Messstrahlung als Linse ausgebildet sein kann, wieder in die Messvorrichtung 1 eintreten kann und dort von einem als Empfangseinrichtung 23 dienenden Fotodetektor detektiert werden kann. Anhand bestimmter Merkmale wie zum Beispiel einer Phasenverschiebung zwischen einer modulierten Amplitude der ausgesendeten Messstrahlung 15 und einer Amplitude der zurücklaufenden Messstrahlung 19 kann eine Distanz zwischen der Messvorrichtung 1 und dem Zielobjekt 17 bestimmt werden.

Die Messvorrichtung 1 weist ferner eine Verkippungsdetektionseinrichtung 25 auf. Die Verkippungsdetektionseinrichtung 25 weist eine Bildsensorik 29 auf, und kann ergänzend hieren einen Drehratensensor 27 aufweisen.

Der Drehratensensor 27 kann dazu ausgelegt sein, einen Verkippungswinkel und insbesondere eine Verkippungswinkeländerungsrate einer Verkippung um eine Verkippungsachse herum zu detektieren. Die Verkippungsachse liegt hierbei quer zur Aussenderichtung der optischen Messstrahlung 15, das heißt, im gezeigten Beispiel, quer zur x-Richtung und weist somit Bewegungskomponenten y-Richtung und/oder z-Richtung auf.

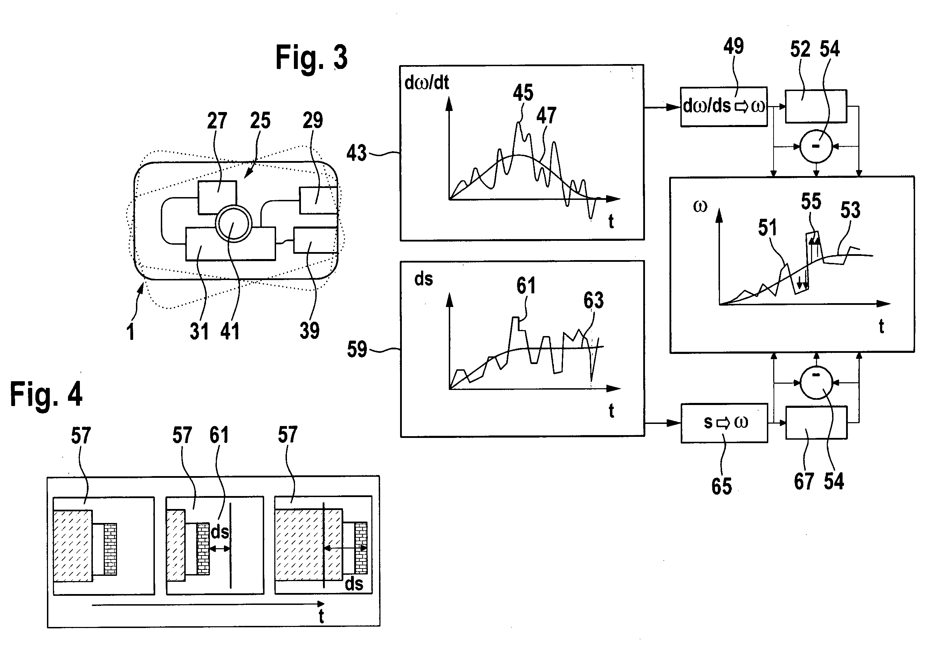

Die Bildsensorik 29 kann in Form eines Videosensors ausgebildet sein und laufend Bilder der Umgebung in Richtung auf das Zielobjekt hin aufnehmen. Wie in Fig. 4 schematisch dargestellt, können diese Bilder hinsichtlich einer Verschiebung ds des Bildinhalts zueinander ausgewertet werden, zum Beispiel durch Vergleichen der Lage von Objekten zwischen aufeinanderfolgenden Bildern. Anhand der Verschiebung kann ermittelt werden, wie die Messvorrichtung 1 verkippt oder verschoben, das heißt beispielsweise verwackelt, wurde.

Sowohl die Sendeeinrichtung 3 als auch die Empfangseinrichtung 23 wie auch die Verkippungsdetektionseinrichtung 25 bzw, wenn vorhanden, deren Drehsensor 27 und deren Bildsensorik 29 sind mit einer zentralen Steuer- bzw. Auswerteeinrichtung 31 verbunden. Die Steuer-/Auswerteeinrichtung 31 steuert einerseits die Sendeeinrichtung 3 hinsichtlich der einzustellenden Aussenderichtung der Messstrahlung 15, indem beispielsweise der ebenfalls mit der Steuer-/Auswerteeinrichtung 31 verbundene Spiegel 11 zu einer entsprechenden Verkippung angesteuert wird. Andererseits empfängt die Steuer-/Auswerteeinrichtung 31 die Empfangssignale von der Empfangseinrichtung 23 und wertet diese beispielsweise hinsichtlich einer Phasenverschiebung bezüglich einer angesteuerten Modulation der Lichtquelle 5 aus und kann den hieraus errechneten Entfernungswert auf einer Anzeige 33 darstellen.

Wie in Fig. 2 schematisch dargestellt, kann anhand der von der Verkippungsdetektionseinrichtung 25 erfassten Werte für einen aktuellen Verkippungswinkel bzw. eine aktuelle Verkippungswinkeländerungsrate die Steuer-/Auswerteeinrichtung 31 die Sendeeinrichtung 3 derart ansteuern, dass die Aussenderichtung der Messstrahlung 15 derart variiert wird, dass einer kurzfristigen Verkippung der Messvorrichtung, die beispielsweise durch ein Zittern des die Messvorrichtung haltenden Anwenders hervorgerufen ist, ausgeglichen wird. Auf diese Weise kann erreicht werden, dass die Messstrahlung 15 unabhängig von etwaigen Verwacklungen stets auf dasselbe Zielobjekt 17 hin ausgerichtet bleibt und dieses mit seiner Messstrahlung 15 erfasst.

Im gegebenen Beispiel kann hierbei durch Betätigung einer Taste 35 eine stabilisierte Messung gestartet werden. Gleichzeitig mit der Messung kann ein von der Bildsensorik 29 erfasstes Videobild oder gegebenenfalls eine Sequenz mehrerer Videobilder in einer digitalen Speichereinrichtung 37 zur Dokumentation der Messung abgespeichert werden. Die Speichereinrichtung kann beispielsweise in Form einer auswechselbaren SD-Speicherkarte ausgestaltet sein, auf der die Videobilder im JPEG- oder MPEG-2-Format abgespeichert werden können.

In Fig. 3 ist eine Ausführungsform einer Messvorrichtung 1 exemplarisch mit einem Drehratensensor 27 und einer Bildsensorik 29 sowie einer Entfernungsmesseinheit 39, die sowohl die in Fig. 1 dargestellte Sendeeinrichtung 3 als auch die Empfangseinrichtung 23 umfasst, dargestellt. Die genannten Komponenten 27, 29, 39 sind mit einer Steuer-/Auswerteeinrichtung 31 verbunden. Im dargestellten Beispiel wird die Messvorrichtung 1 um eine sich in z-Richtung erstreckende Verkippungsachse 41 verkippt.

In dem mit dem Bezugszeichen 43 versehenen Graphen ist beispielhaft ein zu erwartender Messwerteverlauf einer von dem Drehratensensor 27 erfassten Drehrate dω/dt in Abhängigkeit von der Zeit t dargestellt. Der Verlauf 45 beinhaltet sowohl höherfrequente Anteile als auch niederfrequente Anteile. Die höherfrequenten Anteile sind im "Zittern" des Anwenders begründet. Die niederfrequenten Anteile 47 entstehen durch eine gezielte, langsame Schwenkbewegung der Messvorrichtung 1. Mittels zum Beispiel zeitlicher Integration 49 wird aus dem Drehratensignal 45 ein Winkelsignal 51 ermittelt. Aus diesem Winkelsignal 51 wird mittels eines digitalen Filters 52, der beispielsweise in Form eines Kalman-Filters ausgebildet sein kann, der hochfrequente Anteil 45 herausgefiltert und es bleibt als Restsignal das "wackelfreie" Bewegungssignal 53 übrig. Durch Subtraktion 54 des geglätteten, "wackelfreien" Bewegungssignals 53 vom "verwackelten" Signal 51 kann eine Abweichungsinformation 55 ermittelt werden. Diese Abweichungsinformation 55 entspricht quantitativ dem "Zittern" des Bedieners, das heißt, sie gibt die momentane Winkelabweichung aufgrund einer durch das Zittern bewirkten Verkippung der Messvorrichtung von einer eigentlichen Sollrichtung an. Mit Hilfe dieser Abweichungsinformation 55 kann nun der Abweichung durch die ungewollte, zitternde Verkippung entgegengewirkt werden, indem die von der Sendeeinrichtung 3 ausgestrahlte Messstrahlung 15 so umgelenkt wird, dass das Zielobjekt 17 weiterhin anvisiert bleibt.

Wie in Fig. 4 schematisch dargestellt, kann das Verfahren der Ermittlung eines Verkippungswinkels bzw. einer Verkippungswinkeländerungsrate mit Hilfe von von der Bildsensorik 29 erfassten Videobildsequenzen 57 durchgeführt werden. Eine entsprechende Analyse ist mit Bezug auf den mit dem Bezugszeichen 59 versehenen Graphen in Fig. 3 dargestellt. Dabei wird zum Beispiel mittels Vergleich ein zeitlicher Verlauf eines Bildversatzes ds 61 ermittelt. Auch dieser zeitliche Informationsverlauf des Bildversatzes 61 variiert über die Zeit t und besteht aus einem höherfrequenten und einem niederfrequenten Anteil 63. Anhand des angenommenen Drehpunktes 41 wird zum Beispiel mittels trigonometrischer Verfahren 65 aus dem Versatz s das eigentliche Winkelsignal 51 und mittels eines digitalen Filters 67 das "wackelfreie" Signal 53 bestimmt. Die Abweichungsinformation 55 kann wiederum zum Steuern der Aussenderichtung der von der Sendeeinrichtung 3 emittierten optischen Messstrahlung 15 verwendet werden.

## Patentansprüche

1. Handgehaltene Messvorrichtung (1) zur optischen Entfernungsmessung, aufweisend eine Sendeeinrichtung (3) zur Aussendung optischer Messstrahlung (15) entlang einer Aussenderichtung auf ein Zielobjekt (17) hin; eine Empfangseinrichtung (23) zur Detektion von von dem Zielobjekt (17) zurücklaufender optischer Messstrahlung (19); eine Steuer-/Auswerteeinrichtung (31) zum Empfangen und Auswerten von Detektionssignalen der Empfangseinrichtung (23) zur Bestimmung einer Entfernung zwischen der Messvorrichtung (1) und dem Zielobjekt (17); und eine Verkippungs-detektionseinrichtung (25), die dazu ausgelegt ist, einen Verkippungswinkel der Messvorrichtung (1) um wenigstens eine Verkippungsachse zu erfassen, wobei die Messvorrichtung (1) dazu ausgelegt ist, die Sendeeinrichtung (3) basierend auf einem von der Verkippungsdetektionseinrichtung (25) erlassten verkippungswinkel einzustellen, indem die Sendeeinrichtung (1) eine steuerbare Umlenkeinrichtung (9) aufweist, um einen von einer Lichtquelle (5) ausgesendeten Messstrahl (7) in die Aussenderichtung umzulenken, **dadurch gekennzeichnet, dass** die Verkippungsdetektionseinrichtung (25) eine Bildsensorik (29) aufweist, die dazu ausgelegt ist, den Verkippungswinkel aufgrund einer relativen Verschiebung eines aufgenommenen Merkmals innerhalb einer Sequenz von aufgenommenen Bildern zu bestimmen.

2. Messvorrichtung nach Anspruch 1, wobei die Verkippungsdetektionseinrichtung (25) dazu ausgelegt ist, eine Verkippungswinkeländerungsrate zu erfassen.

3. Messvorrictung nach 2, wobei die Messvorrichtung (1) dazu ausgelegt ist, die Sendeeinrichtung (3) basierend auf einem von der Verkippungsdetektions einrichtung (25) erfassten Verkippungswinkel nur dann einzustellen, wenn die Verkippungswinkeländerungsrate oberhalb eines Schwellenwertes ist.

4. Messvorrichtung nach einem der Ansprüche 1 bis 3, wobei die Verkippungsdetektionseinrichtung (25) zusätzlich einen Drehratensensor (27) aufweist.

5. Messvorrichtung Anspruch 1, ferner aufweisend eine Speichereinrichtung (37), wobei die Bildsensorik (29) dazu ausgelegt ist, ein Bild einer aktuellen Messsituation aufzunehmen und in der Speichereinrichtung (37) zu speichern.

6. Messvorrichtung nach einem der Ansprüche 1 bis 5, wobei die Messvorrichtung (1) dazu ausgelegt ist, basierend auf wenigstens zwei Entfernungsmessungen und wenigstens einer Messung eines Verkippungswinkels einer zwischen den Entfernungsmessungen durchgeführten Verkippung Zusatzinformation zu berechnen.

## Claims

1. Handheld measuring apparatus (1) for optical distance measurement, comprising a transmitting device (3) for emitting optical measurement radiation (15) along an emission direction towards a target object (17); a receiving device (23) for detecting optical measurement radiation (19) returning from the target object (17); a control/evaluation device (31) for receiving and evaluating detection signals of the receiving device (23) for determining a distance between the measuring apparatus (1) and the target object (17); and a tilting detection device (25), which is designed to detect a tilting angle of the measuring apparatus (1) about at least one tilting axis, wherein the measuring apparatus (1) is designed to set the transmitting device (3) on the basis of a tilting angle detected by the tilting detection device (25) by virtue of the fact that the transmitting device (1) has a controllable deflection device (9) in order to deflect a measurement beam (7) emitted by a light source (5) in the emission direction,
**characterized in that** the tilting detection device (25) has an image sensor system (29), which is designed to determine the tilting angle on the basis of a relative displacement of a recorded feature within a sequence of recorded images.

2. Measuring apparatus according to Claim 1, wherein the tilting detection device (25) is designed to detect a rate of change of the tilting angle.

3. Measuring apparatus according to Claim 2, wherein the measuring apparatus (1) is designed to set the transmitting device (3) on the basis of a tilting angle detected by the tilting detection device (25) only if the rate of change of the tilting angle is above a threshold value.

4. Measuring apparatus according to any of Claims 1 to 3, wherein the tilting detection device (25) additionally has a rate-of-rotation sensor (27).

5. Measuring apparatus according to Claim 1, furthermore comprising a storage device (37), wherein the image sensor system (29) is designed to record an image of a current measurement situation and to store it in the storage device (37).

6. Measuring apparatus according to any of Claims 1 to 5, wherein the measuring apparatus (1) is designed to calculate additional information on the basis of at least two distance measurements and at least one measurement of a tilting angle of a tilting carried out between the distance measurements.

## Revendications

1. Dispositif de mesure tenu à la main (1) destiné à la mesure optique de distance, comprenant un dispositif d'émission (3) destiné à émettre un rayonnement de mesure optique (15) dans une direction d'émission vers un objet cible (17) ; un dispositif de réception (23) destiné à détecter un rayonnement de mesure optique (19) renvoyé par l'objet cible (17) ; un dispositif de commande/évaluation (31) destiné à recevoir et évaluer des signaux de détection du dispositif de réception (23) afin de déterminer une distance entre le dispositif de mesure (1) et l'objet cible (17) ; et un dispositif de détection d'inclinaison (25) qui est conçu pour détecter un angle d'inclinaison du dispositif de mesure (1) autour d'au moins un axe d'inclinaison, dans lequel le dispositif de mesure (1) est conçu pour régler le dispositif d'émission (3) sur la base d'un angle d'inclinaison détecté par le dispositif de détection d'inclinaison (25) par le fait que le dispositif d'émission (1) comprend un dispositif de déviation (9) pouvant être commandé afin de dévier dans la direction d'émission un faisceau de mesure (7) émis par une source de lumière (5),
**caractérisé en ce que** le dispositif de détection d'inclinaison (25) comprend des capteurs d'images (29) qui sont conçus pour déterminer l'angle d'inclinaison sur la base d'un déplacement relatif d'un élément caractéristique acquis à l'intérieur d'une séquence d'images acquises.

2. Dispositif de mesure selon la revendication 1, dans lequel le dispositif de détection d'inclinaison (25) est conçu pour détecter une vitesse de variation de l'angle d'inclinaison.

3. Dispositif de mesure selon la revendication 2, dans lequel le dispositif de mesure (1) est conçu pour régler le dispositif d'émission (3) sur la base d'un angle d'inclinaison détecté par le dispositif de détection d'inclinaison (25) lorsque la vitesse de variation de l'angle d'inclinaison est supérieure à une valeur de seuil.

4. Dispositif de mesure selon l'une quelconque des revendications 1 à 3, dans lequel le dispositif de détection d'inclinaison (25) comprend en outre un capteur de vitesse de rotation (27).

5. Dispositif de mesure selon la revendication 1, comprenant en outre un dispositif de mémoire (37), dans lequel les capteurs d'images (29) sont conçus pour acquérir une situation de mesure actuelle et la stocker dans le dispositif de mémoire (37).

6. Dispositif de mesure selon l'une quelconque des revendications 1 à 5, dans lequel le dispositif de mesure (1) est conçu pour calculer des informations supplémentaires sur la base d'au moins deux mesures de distance et d'au moins une mesure d'un angle d'inclinaison d'une inclinaison se produisant entre les mesures de distance.
